# EUROPEAN PATENT APPLICATION

(11) **EP 4 714 728 A1**
(43) Date of publication of application: **25.03.2026**
(21) Application number: 24781189.6
(22) Date of filing: 26.03.2024
(51) Int. Cl.: B60L 53/16, B60L 53/18, H01R 13/629, H01R 13/639, H01R 13/62, H01R 13/52, H01R 13/713

(54) **AUTO-EJECT CHARGING PLUG**

(30) Priority: 29.03.2023 KR 20230040973
(71) Applicant: Green Power Co., Ltd., Hwaseong-si, Gyeonggi-do 18469 (KR)
(72) Inventor: CHO, Jung Goo, Suwon-si Gyeonggi-do 16517 (KR)
(74) Representative: Schön, Christoph
(86) International application number: PCT/KR2024/003784
(87) International publication number: WO 2024/205198

(57) **Abstract**

When a fire breaks out while charging an electric vehicle, the electric vehicle must be immersed in a water tank to completely extinguish the fire. To immerse the electric vehicle in the water tank, the electric vehicle must be removed from a parking lot and moved to the water tank for immersing, or must be covered with a mobile water tank made in the parking lot. However, this work may not be possible when a charging plug is still plugged into the electric vehicle. In order to remove the electric vehicle which has caught fire, or to cover the electric vehicle with the mobile water tank or a mobile fire-smothering blanket, the charging plug needs to have an auto-eject function. Furthermore, in the case of a mobile charger, this function is also necessary in order to move to another electric vehicle for charging after the end of charging. The present invention provides a charging plug having an auto eject function that automatically ejects the plug in the event of a fire during charging or at the end of charging by using a release means for releasing a locking means provided on the charging plug or on an electric vehicle charging inlet and a separation means for separating a charging gun.

## Description

### BACKGROUND

### 1. FIELD

The present disclosure relates to a charging plug, and more particularly, to a charging plug having an auto-eject function for automatically removing the plug when a fire breaks out during charging or when charging is completed.

### 2. DESCRIPTION OF RELATED ART

The contents described below are merely provided as background information related to an embodiment and are not included in the related art.

Recently, due to climate change caused by pollution from fossil fuels, the market for electric vehicles using batteries has been rapidly growing to drastically reduce dependence on fossil fuels.

Accordingly, the market for electric vehicle chargers is also rapidly expanding, and installation of electric vehicle chargers in building parking lots is also increasing. However, fires occasionally break out at electric-vehicle charging stations due to overcharging of a battery or an abnormal operation inside the battery.

One effective method for extinguishing fires breaking out in an electric vehicle is to cover the vehicle with a fire-smothering blanket to block oxygen and suppress combustion. However, after a certain period of time, secondary ignition may occur due to hydrogen occurring inside the battery, resulting in incomplete extinguishment. Therefore, the most complete fire-extinguishing method is known to be immersion of the burning electric vehicle in fire in a water tank.

In order to immerse an electric vehicle in a water tank, the vehicle is required to be removed from a parking lot and transferred into the water tank, or a mobile water tank is required to be created in the parking lot and positioned over the vehicle. However, such work may be impossible if a charging plug is inserted into the electric vehicle.

Therefore, in order to remove the burning electric vehicle or cover the electric vehicle with a mobile water tank or a mobile fire-smothering blanket, a charging plug is required to have an auto-eject function. In addition, a mobile-type charger also requires the same function to move to another electric vehicle and continue charging after charging is completed.

### SUMMARY

In a conventional electric-vehicle charging system, when charging is completed, it is common for a user to directly remove a charging plug from a charging inlet of an electric vehicle.

Meanwhile, when a fire breaks out during charging of the electric vehicle, extinguishment may be achieved only by removing the vehicle from a parking lot and transferring and immersing the vehicle into a water tank, or by creating a mobile water tank in the parking lot and covering the vehicle. However, such work may be impossible if the charging plug is inserted into the electric vehicle.

An aspect of the present disclosure may provide a charging plug having an auto-eject function for automatically removing the plug when a fire breaks out during electric-vehicle charging, thereby enabling firefighting work for an electric vehicle to be rapidly performed.

Another aspect of the present disclosure may provide a charging plug implemented to be automatically separable when charging is completed to provide a mobile electric-vehicle charging system with an environment in which a vehicle owner or another person does not need to directly remove the charging plug, and an electric vehicle charger whose charging is completed may naturally move to another charging position and perform new charging, thereby maximizing convenience of charging.

According to an aspect of the present disclosure, provided is a charging plug included in an electric vehicle charger,
the charging plug including: a charging-plug body; a charging connector detachably coupled to a charging inlet of an electric vehicle and including a plurality of terminals disposed on one side of the charging-plug body and protruding from the charging-plug body; and a charging cable connected to the charging connector and providing a charging current supplied from the electric vehicle charger, wherein
any one of an electric-vehicle charging inlet and the charging-plug body includes a locking means for preventing separation of the charging connector from the charging inlet when the charging connector is coupled to the charging inlet, and
the plug is automatically ejected when necessary by using a release means for releasing the locking means and a separation means for separating the charging connector from the charging inlet.

In addition, according to the present disclosure, the charging plug may include the damage-prevention cover formed of the cushioning material surrounding the charging-plug body to prevent the charging plug from colliding with the nearby vehicle or object and causing the damage or breakage when the charging connector is separated from the charging inlet.

According to the present disclosure, the charging plug may be implemented to have the auto-eject function for automatically removing the plug when a fire breaks out during electric-vehicle charging, thereby enabling the firefighting work for an electric vehicle to be rapidly performed.

In addition, according to the present disclosure, the charging plug may be implemented to be automatically separable when charging is completed to provide the mobile electric-vehicle charging system with the environment in which the vehicle owner or another person does not need to directly remove the charging plug, and the electric vehicle charger whose charging is completed may naturally move to another charging position and perform new charging, thereby maximizing the convenience of charging.

### BRIEF DESCRIPTION OF DRAWINGS

FIG. 1 is a configuration diagram of a conventional electric-vehicle charging system.
FIGS. 2A and 2B are configuration diagrams of a rail-type movable electric-vehicle charging system.
FIGS. 3A and 3B are diagrams illustrating a shape of a charging plug having an auto-eject function according to the present disclosure.
FIG. 4 is a diagram illustrating the shape of a charging plug having an auto-eject function according to another embodiment of the present disclosure.
FIGS. 5A and 5B are diagrams illustrating the internal structure and operation of the charging plug having an auto-eject function according to the present disclosure.
FIGS. 6A and 6B are diagrams illustrating the internal structure and operation of a charging plug having an auto-eject function according to another embodiment of the present disclosure.
FIGS. 7A and 7B are diagrams illustrating an overheating detection means disposed on the charging plug according to the present disclosure.
FIGS. 8A and 8B are diagrams illustrating a damage-prevention cover disposed on the charging plug according to the present disclosure.
FIGS. 9A, 9B, and 9C are diagrams illustrating a reel-winding process of the charging plug according to the present disclosure.

### DETAILED DESCRIPTION

A preferred embodiment of the present disclosure will be described below in detail with reference to the accompanying drawings. The following detailed description is merely illustrative and exemplifies only a preferred embodiment of the present disclosure.

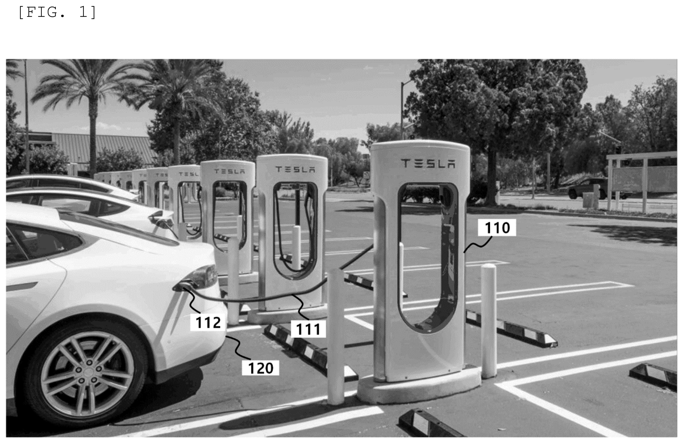

FIG. 1 is a configuration diagram of a conventional electric-vehicle charging system.

Referring to FIG. 1, in the conventional electric vehicle charging system, a plurality of electric vehicle chargers 110 may be installed in a parking space provided with at least one parking area, and the plurality of electric vehicle chargers 110 may charge an electric vehicle 120 parked on a corresponding parking area.

Here, a user may perform charging for the electric vehicle 120 by pulling a charging cable 111 wound on the electric vehicle charger 110 to move a charging plug 112 close to an inlet position of an electric vehicle and coupling the charging plug 112 to an inlet of the electric vehicle.

A charging system using such a conventional fixed-type charger may have a limitation in that the space and number of chargers are restricted. In addition, when electric-vehicle charging is completed, the vehicle is required to be removed quickly. Otherwise, a penalty fee may be imposed, and a stress experienced by the user may thus be very high.

For example, the charging plug of the charged electric vehicle is required to be removed in order to charge another electric vehicle, and the user of the charger may thus receive a call simultaneously with completion of charging and be required to remove the charging plug from his or her electric vehicle.

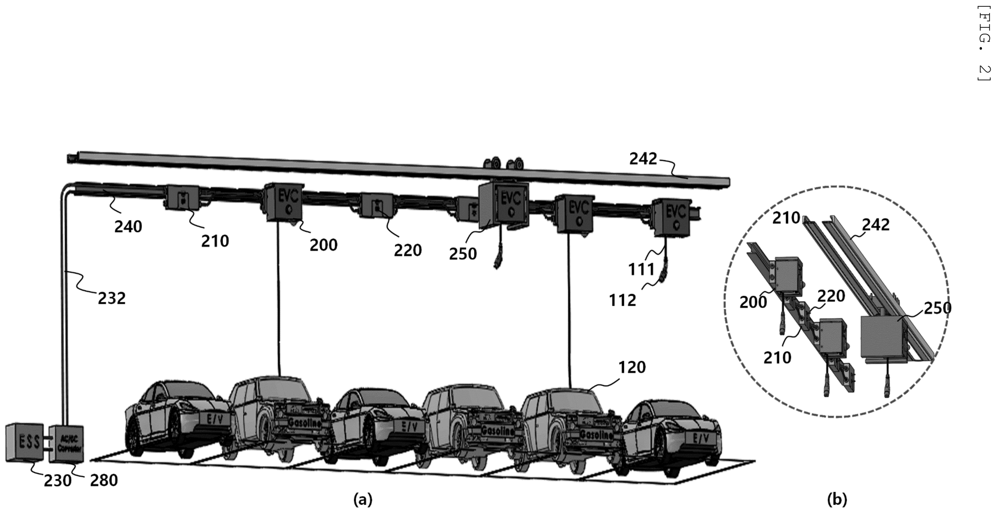

In order to solve such problems, as illustrated in FIGS. 2A and 2B, a rail-type movable electric vehicle charging system is proposed. Meanwhile, FIGS. 2A and 2B illustrate shapes of the rail-type movable electric vehicle charging system viewed from different directions.

The rail-type movable electric vehicle charging system illustrated in FIGS. 2A and 2B corresponds to an improvement over a conventional rail-type movable electric vehicle charging system, and may include a plurality of electric vehicle chargers 200, a plurality of charging spots 210, a power terminal 220 provided at each charging spot, an alternating current to direct current (AC/DC) converter 230, a connecting means 232 for connecting an output terminal of the AC/DC converter 230 to the power terminal or another power terminal adjacent thereto, a moving means 250, a system controller, and a remote server device.

Unlike the conventional rail-type movable electric vehicle charging system in which an electric vehicle charger 200 directly moves along a rail, in the rail-type movable electric vehicle charging system, the electric vehicle charger 200 may be moved by the moving means to a parking position of the electric vehicle 120 to be charged. More specifically, the electric vehicle charger 200 may be moved by the moving means 250 to a predetermined charging spot, and then be mounted on the charging spot and receive power by connecting an input terminal to the power terminal disposed in the charging spot, thereby performing a charging function.

Here, the rail along which the moving means 250 moves may be disposed so that no physical interference occurs between the moving means for moving another electric vehicle charger and the electric vehicle charger already mounted on the charging spot.

Accordingly, when the moving means 250 moves one electric vehicle charger, even if another electric vehicle charger is already fixedly connected to one of the charging spots, the moving means 250 may move over the charging spot on which the other electric vehicle charger is fixedly connected to another charging spot, thereby allowing all movable electric vehicle chargers to be freely moved to desired positions to perform charging.

Due to such a configuration, in the rail-type movable electric vehicle charging system illustrated in FIGS. 2A and 2B, when a charging request is received from a specific charging spot and no spare electric vehicle charger remains, and an electric vehicle charger whose charging is completed while its charging plug remains inserted into the electric vehicle is present, if a charging requester separates the charging plug from the corresponding electric vehicle, the separated electric vehicle charger may be moved by the moving means to the specific charging spot to perform charging. This configuration indicates that a movement of the charged electric vehicle to another space is unnecessary.

That is, the rail-type movable electric vehicle charging system in FIGS. 2A and 2B provides an environment for enabling another person to remove the charging plug even after charging is completed, thereby enabling another electric vehicle to be charged without the user having to immediately remove the vehicle.

However, although the rail-type movable charging system is improved compared with the conventional charging system, there still remains an inconvenience that the vehicle owner or another person is required to physically come to remove the charging plug after charging is completed.

Meanwhile, in recent electric vehicle charging systems, methods for extinguishing fires breaking out during charging of electric vehicles more quickly and effectively have been studied in addition to convenience of charging efficiency as described above.

Currently, the only method known as the most complete fire-extinguishing method is to immerse the burning electric vehicle in a water tank. Similarly, in order to immerse an electric vehicle in a water tank, the vehicle is required to be removed from the parking lot and transferred into the water tank, or a mobile water tank is required to be created in the parking lot and positioned over the vehicle. However, such work may be impossible if the charging plug is inserted into the electric vehicle.

For example, when a fire breaks out in the electric vehicle charging system illustrated in FIGS. 1, 2A, or 2B, the user is required to directly remove the charging plug, which may lead to considerable difficulty in removing the burning electric vehicle or covering the burning electric vehicle with a mobile water tank or a mobile fire-smothering blanket.

Accordingly, to resolve such problems, the present disclosure discloses a charging plug supporting an auto-eject function for automatically removing the plug when a fire breaks out during charging or when charging is completed without the user or another person having to directly remove the charging plug.

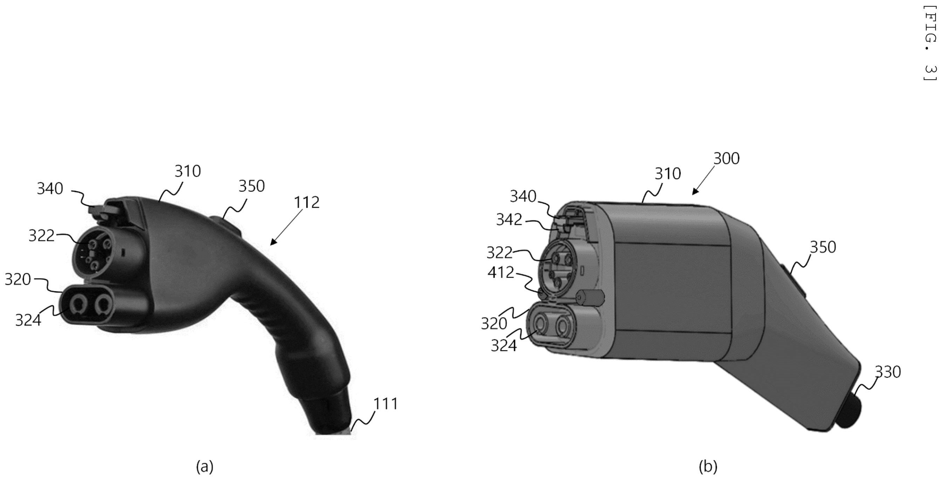

FIGS. 3A and 3B are diagrams illustrating an external appearance of the charging plug according to the present disclosure. FIG. 3A illustrates a configuration of the conventional charging plug, and FIG. 3B illustrates a shape of the charging plug according to the present disclosure.

Meanwhile, FIGS. 3A and 3B illustrate that a charging plug 300 according to the present disclosure is formed based on the American/European "Combo" standard, which is one of the unified standards, and may thus perform both alternating current (AC) slow charging and direct current (DC) fast charging through a single charging plug. However, the present disclosure is not limited thereto.

For example, the charging plug 300 according to the present disclosure may also be applied to the Japanese "ChAdeMO" standard or the Renault "AC three-phase" standard, in addition to the American/European "Combo (Type 1)" standard.

Referring to FIGS. 3A and 3B, similar to the conventional charging plug 112, the charging plug 300 according to the present disclosure may be implemented to include a charging-plug body 310, a charging connector 320, a charging cable 330, and a locking means 340.

The charging-plug body 310 may serve as a type of housing for accommodating and protecting the charging connector 320, the charging cable 330, the locking means 340, and the like.

The charging-plug body 310 may preferably be formed in a gun shape to facilitate engagement of the charging plug 300 with a charging inlet disposed on an electric vehicle.

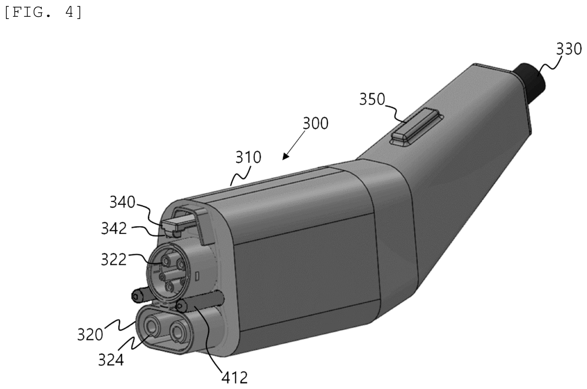

Meanwhile, according to the present disclosure, the charging plug 300 may be applied to the rail-type movable electric vehicle charging system illustrated in FIGS. 2A and 2B. Here, an electric vehicle charger may be installed to be movable along the ceiling of a parking space. Accordingly, unlike the conventional charging plug, as illustrated in FIG. 4, the charging-plug body according to the present disclosure may be implemented to include a handle bent upward. This configuration may allow the user to naturally couple the charging plug 300 descending from the ceiling to the electric-vehicle charging inlet without twisting or bending.

The charging connector 320 refers to a portion detachably coupled to the electric-vehicle charging inlet, and may include a plurality of terminals (AC terminals 322 and DC terminals 324) disposed on an inner side of the charging-plug body 310 and protruding from the charging-plug body 310.

Each of the plurality of terminals may have one end electrically connected to an external power source through the charging cable 330 and the other end electrically connected to the electric-vehicle charging inlet. When the charging plug 300 is implemented according to the American/European "Combo (Type 1)" standard as illustrated in FIGS. 3A and 3B, the plurality of terminals may have a seven-pin combo structure, and may employ various specifications such as an AC five-pin, an AC seven-pin, a DC five-pin combo, or a CHAdeMO structure when implemented according to other standards.

The charging cable 330 may electrically connect a movable electric-vehicle charger body to the charging plug 300 for charging a battery of the electric vehicle.

The charging cable 330 may be inserted through an opposite inner side of the charging-plug body 310 to be connected to the charging connector 320 and provide a charging current supplied from the movable electric vehicle charger.

The charging cable 330 may include electric wires (for DC and AC) and communication lines.

In the rail-type movable electric vehicle charging system in FIGS. 2A and 2B, the charging cable 330 may be implemented as a manual type that is manually unwound by the user, or as an automatic type that is automatically unwound by a separately provided driving unit.

In the manual type, the user of the electric vehicle may pull the charging cable 330 wound on the electric vehicle charger to move the charging gun close to an inlet position of the electric vehicle, and couple the charging gun to the inlet of the electric vehicle, thereby charging the electric vehicle 120.

In the automatic type, the charging cable 330 may be implemented to be automatically unwound by the separately provided driving unit. In this case, the cable may preferably descend automatically to a vehicle height, and then may be manually manipulated by the user.

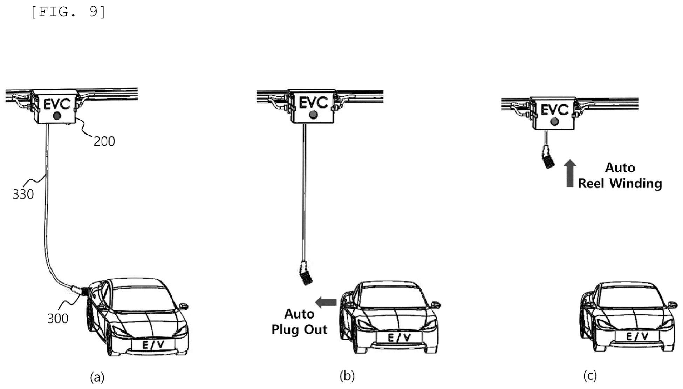

Similarly, the charging cable 330 may be implemented to be automatically wound and raised when the charging plug 300 is separated from the electric-vehicle charging inlet, and details thereof will be described below with reference to FIG. 9.

The locking means 340 may perform a function of preventing separation of the charging connector 320 from the charging inlet when the charging connector 320 is coupled to the charging inlet. Meanwhile, hereinafter, in describing the locking means 340, although the locking means 340 is illustrated and described as being disposed on the charging-plug body, the locking means 340 is not necessarily limited thereto. For example, in another embodiment, the locking means may be disposed on the charging inlet, and in that case, the basic operating principle and shape of the locking means may be the same as or similar to those described below for a case where the locking means is disposed in the charging plug. In this case, the locking means may preferably be released under control of an electric vehicle controller disposed in the electric vehicle.

The locking means 340 may be formed in a bar shape and may be implemented to be elastically engaged with a locking groove disposed on the charging inlet. To this end, the locking means 340 may include a locking protrusion protruding from an end disposed adjacent to a protruding position of the charging connector 320.

According to the present disclosure, the locking means 340 may include an inclined inner surface (e.g., a locking protrusion 342) facing the charging inlet when the charging connector 320 is coupled to the charging inlet, thereby facilitating engagement with the locking means (e.g., locking groove) disposed on the charging inlet.

Meanwhile, a button 350 for manually controlling an operation of the locking means 340 may be disposed on the charging-plug body 310. The button 350 may be manually operated by the user to release the locking means 340 when a failure occurs in a release means 400.

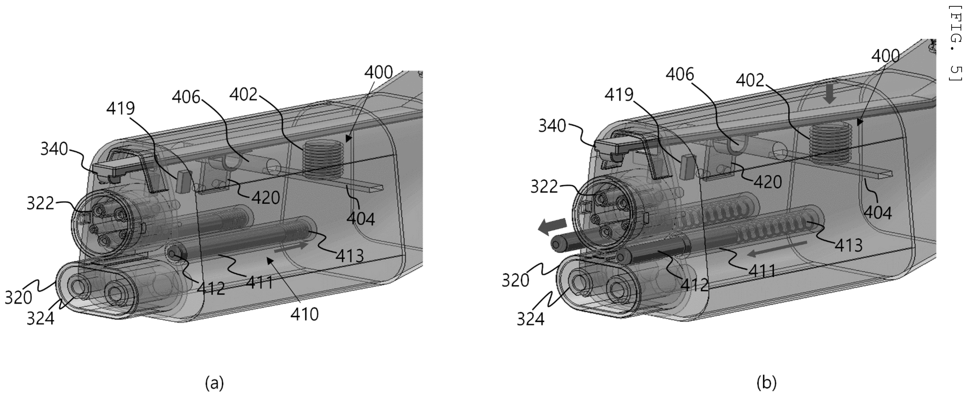

FIGS. 5A and 5B are diagrams illustrating an internal structure of the charging plug for supporting the auto-eject function according to the present disclosure. Hereinafter, in describing the internal structure of the charging plug according to the present disclosure, although the external appearance of the charging plug 300 illustrated in FIG. 4 will be taken as a basic form, the charging plug 300 is not limited thereto, and may have the same internal structure even when its external appearance is implemented as illustrated in FIGS. 3A and 3B.

The charging plug 300 according to the present disclosure may support the auto-eject function for automatically removing the plug by including, in the charging-plug body 310, the release means 400 for releasing the locking means 340, a separation means 410 for separating the charging connector 320 from the charging inlet, and a controller 420 for controlling an operation of a device included in the charging plug 300.

Meanwhile, hereinafter, in describing the internal structure of the charging plug, although the controller 420 is illustrated and described as being included inside the charging plug, the controller 420 is not limited thereto. For example, the controller 420 may be included in the electric-vehicle charger body. In this case, various devices included in the charging plug may receive control commands for their operations through communication with the controller 420.

The release means 400 may serve as a first means for supporting the auto-eject function and perform a function of releasing the locking means 340 engaged with the locking groove on the charging inlet before automatically separating the charging connector 320 from the charging inlet.

The release means 400 according to the present disclosure may include a magnetic material attached to an opposite side of the button 350 for manually releasing the locking means 340 and an electromagnet 402 corresponding to the magnetic material. Here, the electromagnet 402 may include, for example, a plurality of conductor coils and may generate a magnetic force by applying a voltage across the conductor coils.

Accordingly, the release means 400 may be implemented to pull the button 350 by using the magnetic force generated from the electromagnet 402 to release the lock. That is, the release means 400 may pull the button 350 by using the magnetic force generated from the electromagnet 402 to allow the button 350 to operate as if manually pressed by a human hand, thereby releasing the locking means 340.

In this regard, in the charging-plug body 310, a support 404 for supporting the electromagnet 402 and a support means 406 installed in association with the locking means 340 may be disposed, the support means 406 serving as a fulcrum to allow the locking means 340 to be pulled based on the operation of the button 350 by using the electromagnet 402.

Meanwhile, the release means 400 may selectively apply a voltage to the electromagnet 402 when electric-vehicle charging is completed or when a fire breaks out during electric-vehicle charging, based on an operation of the controller 420. Here, the controller 420 may recognize completion of electric-vehicle charging through communication with a remote server device 270 or an electric vehicle charger 200 included in the rail-type movable electric-vehicle charging system, and may recognize whether a fire breaks out through an overheating detection means 500 described below.

The separation means 410 may serve as a second means for supporting the auto-eject function and perform a function of separating the charging connector 320 engaged with the charging inlet in a state where the locking means 340 is released through the release means 400.

The separation means 410 according to the present disclosure may include at least one piston-shaped push pin 412 protruding toward a position of the charging inlet, and may be implemented to allow the push pin 412 to advance toward the position of the charging inlet to push the charging inlet, thereby separating the charging connector 320 engaged with the charging inlet when electric-vehicle charging is completed.

Referring to FIGS. 5A and 5B, the separation means 410 may include a spring 413 protruding from the charging-plug body toward the position of the charging inlet, and the spring 413 may be in a compressed state when the charging connector is coupled to the charging inlet and expand to push out and separate the charging inlet when the locking means 340 is released.

The spring 413 may be connected to the push pin 412. More specifically, the spring 413 may be implemented by drilling a cylindrical hole 411 in the charging-plug body 310, inserting the cylindrical spring 413 into the cylindrical hole 411, and then inserting the push pin 412. In such a structure, the push pin 412 may normally be in a protruding state by the expansion of the spring 413 and may be pushed toward the charging-plug body when engaged with the charging plug, and the spring 413 may be in the compressed state and may expand to push out and separate the charging inlet when the locking means 340 is released.

Meanwhile, according to the present disclosure, the spring 413 may be implemented as a multi-stage spring. For example, the spring 413 may include at least one spring connected to the push pin 412 to allow pressure to gradually increase according to a depth at which the charging plug is engaged.

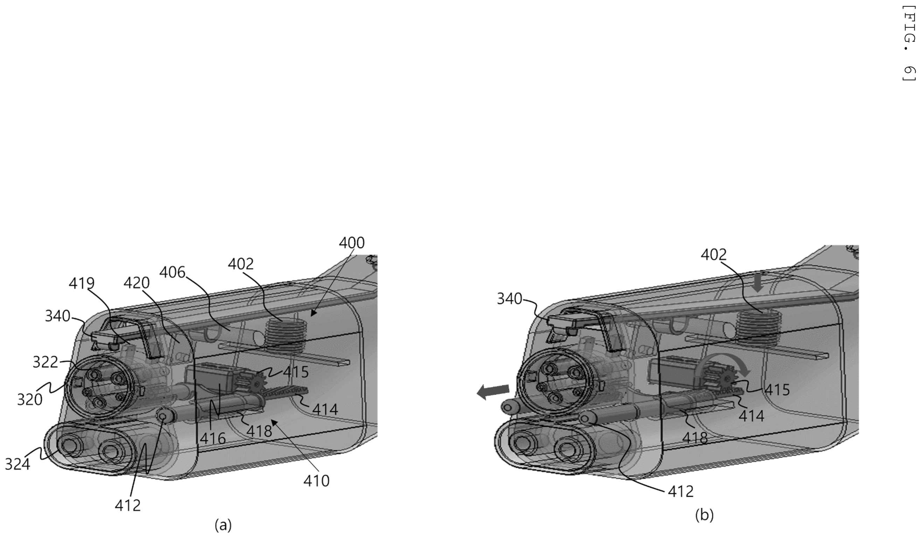

FIGS. 6A and 6B are diagrams illustrating the internal structure and operation of a charging plug having an auto-eject function according to another embodiment of the present disclosure.

Meanwhile, the charging plug having an auto-eject function according to another embodiment of the present disclosure differs in a configuration for driving the separation means 410.

More specifically, the separation means 410 may include a driving means including a rack-and-pinion and a motor 416 and may advance the push pin 412 toward the position of the charging inlet by using the driving means. Here, the rack-and-pinion refers to a linear actuator type including a linear gear (e.g., rack 414) and a circular gear (e.g., pinion 415) engaged therewith to convert rotational motion into linear motion. The rack may be linearly driven when the pinion is rotated by the motor 416, and the pinion may be rotated when the rack is linearly driven. Here, a guide means 418 may be disposed in the charging-plug body 310, the guide means 418 guiding a path of the push pin 412 advancing by using the driving means.

Here, the driving means for operating the separation means 410 may receive driving power for operation from the electric-vehicle charger body. For example, to supply driving power to the driving means, a separate cable may be additionally connected to the charging plug from the electric-vehicle charger body.

In another embodiment, the driving means may receive an output voltage of the charging plug as driving power for operation.

Meanwhile, the motor 416 included in the separation means 410 may include a speed-reducing means (not shown) connected to the driving means and reducing a rotational speed. In this case, the speed-reducing means may be used for controlling a movement speed of the push pin 412 advancing toward the position of the charging inlet, thereby preventing damage caused by an excessive impact when the push pin 412 advances and comes into contact with the charging inlet.

In addition, the charging plug may include a position sensor 419 disposed adjacent to the separation means and determining a current position of the push pin based on the operation of the driving means. By using the position sensor 419, it becomes possible to determine whether the push pin 412 is completely extended or completely retracted based on the operation of the driving means, thereby enabling the driving means to be controlled more precisely.

In the above-described structure, the separation means 410 may drive the driving means when electric-vehicle charging is completed or when a fire breaks out during electric-vehicle charging, based on the operation of the controller 420. Preferably, the controller 420 may first issue a control command to the release means 400 and issue the control command to the separation means 410 after a predetermined time elapses.

Therefore, the auto-eject function for automatically removing the charging plug may be implemented when a fire breaks out during charging or when charging is completed based on the operations of the release means 400 and the separation means 410 according to the present disclosure. This configuration may allow rapid transfer of a burning electric vehicle by automatically separating the charging plug from the electric vehicle during charging when a fire breaks out, thereby achieving rapid fire suppression.

In addition, in the rail-type movable charging system, an environment may be disposed in which an electric vehicle charger whose charging is completed may naturally move to another charging position and perform new charging without the vehicle owner or another person having to directly remove the charging plug, thereby maximizing charging convenience.

Meanwhile, in the foregoing description of the internal structure of the charging plug according to the present disclosure, the release means for releasing the locking means and the separation means for separating the charging connector from the charging inlet are illustrated and described as being included inside the charging plug. However, the release means and the separation means are not limited thereto. For example, in another embodiment, at least one of the release means and the separation means may be disposed on the charging inlet. In this case, the charging plug may be implemented to automatically remove the plug by using the corresponding means when necessary. Here, the basic operating principles and shapes of the release means and the separation means may be the same as or similar to those in the case where the means are disposed in the charging plug.

Similarly, in this case, the controller 420 may preferably be disposed on the electric vehicle. Similar to the case where the controller is disposed on the charging plug, the controller may operate to automatically separate the charging gun by driving the release means and the separation means when electric-vehicle charging is completed or when a fire breaks out during electric-vehicle charging. To this end, a detection sensor may be disposed on the electric vehicle, the detection sensor detecting completion of electric-vehicle charging or breaking out of a fire during electric-vehicle charging.

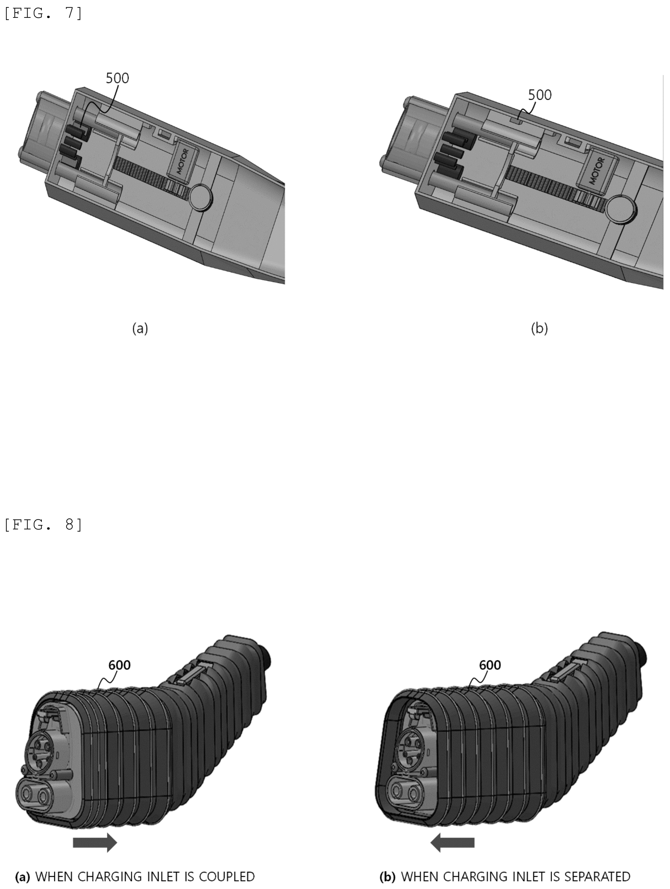

As illustrated in FIG. 7A, the charging plug according to the present disclosure may include the overheating detection means 500. The overheating detection means 500 may preferably be disposed on the plurality of terminals included in the charging connector.

According to the present disclosure, it is regarded as having a fire risk when a temperature of the charging connector increases to a predetermined value or more by using the overheating detection means 500, and the controller may control the release means and the separation means sequentially to allow the auto-eject function to be executed.

In another embodiment, as illustrated in FIG. 7B, the overheating detection means 500 may be disposed on an inner wall surface inside the charging-plug body 310. In this case, the temperature in the charging-plug body 310 may be measured by using the overheating detection means 500, and it is regarded as having a fire risk when the measured temperature increased to the predetermined value or more, and the controller may control the release means and the separation means sequentially to allow the auto-eject function to be executed.

In still another embodiment, when detecting a fire from an external fire detection means (e.g., an electric vehicle), the controller may control the release means and the separation means by issuing commands to allow the auto-eject function for automatically removing the plug to be executed.

Meanwhile, when the charging connector is automatically separated from the charging inlet by the auto-eject function of the charging plug 300 as described above, the charging plug may collide with a nearby vehicle or object during separation, thus causing damage or breakage. This risk may lead to a more serious problem in that personal injury may occur if a person is present near the electric vehicle.

To resolve the above problem, the charging plug 300 according to the present disclosure may include a damage-prevention cover 600 formed of a cushioning material surrounding the charging-plug body to prevent the charging plug from colliding with a nearby vehicle or object and causing damage or breakage when the charging connector is separated from the charging inlet.

For example, referring to FIGS. 8A and 8B, according to the present disclosure, the damage-prevention cover 600 may preferably have a wrinkled external appearance to be flexible. More specifically, in such a structure, the damage-prevention cover 600 may be partially rolled by external pressure when the charging connector is coupled to the charging inlet, as illustrated in FIG. 9A, and may unfold again to completely surround the charging plug 300 when the charging connector is separated from the charging inlet, as illustrated in FIG. 9B.

In such a structure, the damage-prevention cover 600 may protect an external object from the charging plug while not interfering with engagement between the charging inlet and the charging connector.

Meanwhile, although not illustrated in FIG. 8A or 8B, the charging cable 330 connected to the charging plug according to the present disclosure may also include a cushioning means formed of a soft material. Similarly, the cushioning means may prevent damage or breakage to a nearby vehicle or object caused by the rigid charging cable when the charging connector is separated from the charging inlet.

FIGS. 9A, 9B, and 9C are diagrams illustrating a reel-winding process of the charging plug according to the present disclosure. Meanwhile, FIGS. 9A, 9B, and 9C are diagrams illustrating states of the charging plug during charging and upon completion of charging in the rail-type movable electric-vehicle charging system.

First, referring to FIG. 9A, according to the present disclosure, when the electric vehicle charger is moved to a parking position of the electric vehicle, the user may pull the charging cable wound on the electric vehicle charger to move the charging plug 300 close to the inlet position of the electric vehicle, and couple the charging plug 300 to the inlet of the electric vehicle, thereby charging the electric vehicle 120.

Next, referring to FIG. 9B, when electric-vehicle charging is completed or when a fire breaks out during electric-vehicle charging, the engagement between the charging plug and the charging inlet may be automatically released by auto plug-out function, even without the vehicle owner or another person directly removing the charging plug.

Finally, referring to FIG. 9C, the charging cable 330 may be implemented to be automatically raised as the charging plug is separated from the charging inlet, and the charging plug may also be wound and raised together with the charging cable 330 toward the electric vehicle charger. This configuration may allow the electric vehicle charger whose charging is completed to naturally move to another charging position and perform new charging in the rail-type movable electric-vehicle charging system. In addition, even when a fire breaks out in an electric vehicle, the charging plug coupled to the electric-vehicle charging inlet may be automatically separated, thereby enabling rapid performance of firefighting work for the electric vehicle.

As described above, the embodiments of the present disclosure have been disclosed in the specification and drawings, and specific terms have been used. However, these terms are used merely to describe the technical contents of the present disclosure more easily and to assist understanding of the present disclosure in a general sense, and are not intended to limit the scope of the present disclosure. In addition to the embodiments disclosed herein, it will be apparent to those skilled in the art to which the present disclosure pertains that various modifications may be made based on the technical spirit of the present disclosure.

### [Description of Reference Numerals]

110, 200: electric vehicle charger 111, 330: charging cable
112, 300: charging plug 120: electric vehicle
210: charging spot 220: power terminal
230: AC/DC converter 232: connecting means
240: fixing mechanism 242: rail
250: moving means 280: energy storage device
310: charging-plug body 320: charging connector
322: AC terminal 324: DC terminal
340: locking means 342: locking protrusion
350: button
400: release means 402: electromagnet
404: support 406: support means
410: separation means 411: cylindrical hole
412: push pin 413: spring
414: rack 415: pinion
416: motor 418: guide means
419: position sensor 420: controller
500: overheating detection means 600: damage-prevention cover

## Claims

1. A charging plug included in an electric vehicle charger and having an auto-eject function, the charging plug comprising:
a charging-plug body;
a charging connector detachably coupled to a charging inlet of an electric vehicle and including a plurality of terminals disposed on one side of the charging-plug body and protruding from the charging-plug body; and
a charging cable connected to the charging connector and providing a charging current supplied from the electric vehicle charger,
wherein any one of an electric-vehicle charging inlet and the charging-plug body includes a locking means for preventing separation of the charging connector from the charging inlet when the charging connector is coupled to the charging inlet, and
the plug is automatically ejected when necessary by using a release means for releasing the locking means and a separation means for separating the charging connector from the charging inlet.

2. The charging plug of claim 1, wherein the locking means and the release means are disposed in the charging-plug body, and
the release means includes a magnetic material attached to an opposite side of a button for manually pressing and releasing the locking means and an electromagnet corresponding to the magnetic material, and is implemented to pull the button by using a magnetic force generated from the electromagnet to allow the lock to be released.

3. The charging plug of claim 1, wherein the locking means is disposed on the electric-vehicle charging inlet, and
an electric-vehicle controller controls the release means to release the locking means when a fire breaks out or when charging is completed.

4. The charging plug of claim 1, wherein the separation means is disposed in the charging-plug body,
includes at least one piston-shaped push pin disposed in the charging-plug body and protruding toward a position of the charging inlet, and
is implemented to allow the push pin to advance toward the position of the charging inlet to push the charging inlet, thereby separating the charging connector engaged with the charging inlet.

5. The charging plug of claim 4, wherein the separation means includes a driving means including a rack-and-pinion and a motor connected to the push pin, and
advances the push pin toward the position of the charging inlet by using the driving means.

6. The charging plug of claim 5, wherein the driving means receives driving power for operation from the electric vehicle charger or from an output voltage of the charging plug.

7. The charging plug of claim 4, wherein the push pin includes a spring disposed in the charging-plug body,
the push pin is normally in a protruding state by expansion of the spring and is pushed toward the charging-plug body when engaged with the charging plug, and
the spring is in a compressed state and expands to push out and separate the charging inlet when the locking means is released.

8. The charging plug of claim 1, wherein the charging-plug body includes a damage-prevention cover formed of a cushioning material surrounding the charging-plug body to prevent the charging plug from colliding with a nearby vehicle or object and causing damage or breakage when the charging connector is separated from the charging inlet.

9. The charging plug of claim 8, wherein the damage-prevention cover has a wrinkled external appearance,
is rolled by external pressure when the charging connector is coupled to the charging inlet, and
unfolds again to completely surround the charging plug when the charging connector is separated from the charging inlet.
